# EUROPÄISCHE PATENTANMELDUNG

(11) **EP 1 785 717 A1**
(43) Veröffentlichungstag der Anmeldung: **16.05.2007**
(21) Anmeldenummer: 05024823.6
(22) Anmeldetag: 14.11.2005
(51) Int. Cl.: G01N 5/04, G01N 33/34, G01N 1/28

(54) **Vorrichtung und Verfahren zur Bestimmung eines organischen und eines anorganischen Anteils einer Probe**

(71) Anmelder: BTG Mütek GmbH, 82211 Herrsching (DE)
(72) Erfinder: Falkenberg, Wolfgang, 82229 Seefeld (DE); Mornhinweg, Markus, 86911 Diessen (DE)
(74) Vertreter: Bohnenberger, Johannes

(57) **Zusammenfassung**

Es wird eine Vorrichtung zur Bestimmung eines organischen und eines anorganischen Anteils einer Probe aufgezeigt, die ein Suspensionsmittel, insbesondere Wasser sowie Feststoffe umfasst. Es ist eine vorzugsweise dicht abschließbare Behandlungskammer vorgesehen, die eine Probenaufnahmevorrichtung, eine Filtereinrichtung, die derart ausgebildet und an der Probenaufnahmevorrichtung angebracht ist, dass das Suspensionsmittel durch die Filtereinrichtung aus der Probe abführbar ist, eine Absaugvorrichtung zum Abführen des Suspensionsmittels, eine Wärmeenergiequelle zum Zuführen von Wärmeenergie zur Probe, eine Temperaturmesseinrichtung zur Erfassung der Temperatur der Probe, eine Wiegeeinrichtung zum Wiegen der Probe und eine Steuer- und Auswerteeinrichtung umfasst, zum Steuern der Energiequelle und zum Aufnehmen und Speichern von Ausgangssignalen der Temperaturmesseinrichtung sowie der Wiegeeinrichtung. Sämtliche Teile der Vorrichtung sind so ausgebildet, dass eine Probe innerhalb der Behandlungskammer analysiert werden kann, ohne sie zwischendurch herausnehmen zu müssen. Dadurch wird eine erhebliche Zeitersparnis erzielt.

## Beschreibung

Die Erfindung betrifft eine Vorrichtung sowie ein Verfahren zur Bestimmung eines organischen und eines anorganischen Anteils einer Probe sowie eine Verwendung hiervon.

In industriellen Prozessen, so zum Beispiel bei der Papierherstellung oder auch bei der Beseitigung von Abfall-Schlämmen müssen dem Prozess kontinuierlich und zwar in möglichst kurzen Abständen Proben entnommen werden, um den Prozess dem Analyse-Ergebnis entsprechend steuern bzw. regeln zu können. So muss beispielsweise bei der Papierherstellung festgestellt werden, welche organischen Faseranteile und welche anorganischen Pigmentanteile in der Probe vorliegen, um die Herstellungsparameter optimal einstellen zu können.

Bei den bisherigen Analysemethoden wird hierzu schrittweise unter Zuhilfenahme verschiedener Messeinrichtungen vorgegangen. Diese Vorgehensweise ist außerordentlich zeitaufwändig, so dass zwischen dem Ziehen der Probe und dem Vorliegen des Analyse-Ergebnisses eine erhebliche Zeitdauer vorliegt, die als "Totzeit" in die Regelung des Vorgangs eingeht.

Der Erfindung liegt die Aufgabe zu Grunde, eine Vorrichtung und ein Verfahren der eingangs genannten Art dahin gehend aufzuzeigen, dass eine schnelle und korrekte Probenmessung ermöglicht wird.

Diese Aufgabe wird vorrichtungsmäßig gemäß Anspruch 1 und verfahrensmäßig gemäß Anspruch 14 gelöst. Besondere Verwendungen der Vorrichtung sind in den Ansprüchen 21 und 22 beschrieben.

Ein wesentlicher Punkt der Erfindung liegt darin, dass alle Schritte zur Behandlung der Probe und Messung der hier wichtigen Parameter in einem geschlossenen System (z.B. einer Behandlungskammer) vorgenommen werden, so dass ein gesondertes "Proben-Handling" und deren Transport von Messeinrichtung zu Messeinrichtung und von Behandlungsvorrichtung zu Behandlungsvorrichtung entfällt.

Im Detail weist die Vorrichtung zur Bestimmung eines organischen und eines anorganischen Anteils einer ein Suspensionsmittel, insbesondere Wasser und Feststoffe umfassenden Probe eine vorzugsweise dicht abschließbare Behandlungskammer auf. Diese umfasst eine Probenaufnahmevorrichtung, eine Filtereinrichtung, die derart ausgebildet und an der Probenaufnahmevorrichtung angebracht ist, dass das Suspensionsmittel durch die Filtereinrichtung aus der Probe abführbar ist, eine Absaugvorrichtung zum Abführen des Suspensionsmittels, eine Wärmeenergiequelle zum Zuführen von Energie, insbesondere Wärmestrahlung zur Probe, eine Temperaturmesseinrichtung zur Erfassung der Temperatur, eine Wiegeeinrichtung zum Feststellen des Gewichtes der Probe sowie eine Steuer- und Auswerteeinrichtung zum Steuern der Wärmeenergiequelle und zum Aufnehmen und Speichern von Ausgangssignalen der Temperaturmesseinrichtung sowie der Wiegeeinrichtung.

Dadurch, dass die Temperatur und das Gewicht der Probe im Wesentlichen ständig (soweit dies bei digitalen Systemen geschieht) überwacht werden, können die einzelnen Prozessschritte mit einem minimalen Zeitaufwand durchgeführt werden. Insbesondere kann eine automatisierte "Umschaltung" von jedem Schritt zum nächsten durchgeführt werden, was bei den herkömmlichen Analysesystemen dieser Art nicht der Fall ist.

Die Filtereinrichtung weist ein für Verbrennungs- und Pyrolysetemperaturen geeignetes Filter, vorzugsweise ein Glasfaserfilter auf, welches vorzugsweise auswechselbar ist. Nach dem Abführen des Suspensionsmittels dient somit das Filter für den weiteren Prozess als Probenträger. Die Filtereinrichtung kann auch als Stützstruktur für ein (im späteren Verfahren) verbrennendes Filtermaterial, z.B. Papier dienen. Auch Filter aus Keramiken oder dergleichen temperaturfesten anderen Werkstoffen sind mit all ihren Vorteilen einsetzbar.

Es können verschiedenartige Wärmeenergiequellen vorgesehen sein. Besonders schnell und auch besonders gut regelbar sind Mikrowellen-Sender, die üblicherweise bei 2,455 GHz arbeiten. Mit dieser Energiequelle kann bei einer wässrigen Probe das Suspensionsmittel direkt aufgeheizt werden, so dass eine extrem gute Regelbarkeit gegeben ist. Darüber hinaus können mittels Mikrowellen auch Sekundär-Heizelemente aufgeheizt werden, welche mit der Probe in direkter Berührung stehen oder die Mikrowellenenergie in Infrarot-Strahlung umwandeln. Beispielsweise kann auch das eingangs erwähnte Filter aus einem Material gefertigt sein oder ein solches Material enthalten, das aufgrund elektrischer Leitfähigkeit die Mikrowellenenergie absorbiert und damit die Probe aufheizt.

Alternativ oder vor allem auch zusätzlich kann die Wärmeenergiequelle einen Infrarot-Strahler umfassen, und zwar insbesondere solche Infrarot-Strahler, deren Wellenlänge dem aufzuheizenden Material bzw. dessen Absorptionskoeffizienten angepasst ist.

Die Probe kann in einer definierten Menge, in einem Probengefäß in die Behandlungskammer eingeführt werden. Alternativ ist es möglich, die Probe in kleine Teilmengen (Tropfen) dem Filter während des Entwässerungsvorganges zuzuführen, was in vielen Fällen zu einer schnelleren Entwässerung führen kann.

Vorzugsweise ist eine Gaszuführungseinrichtung vorgesehen, zum Zuführen von Gas, insbesondere von Luft zur Behandlungskammer, wobei die Gaszuführungseinrichtung vorzugsweise Einrichtungen zum Konditionieren, insbesondere zum Aufheizen und/oder Trocknen des zugeführten Gases aufweist. Es wird also nicht nur das Suspensionsmittel aus der Probe abgesaugt, es wird vielmehr ein Gas als Hilfsmittel verwendet, um das Suspensionsmittel möglichst rasch zu entfernen. Die Zufuhr des Gases erfolgt derart ungerichtet bzw. turbulent, dass sich bildende Asche im Probengefäß verbleibt und nicht abgeblasen wird. Von besonderem Vorteil ist hierbei die Möglichkeit, das Gas durch die Probe hindurch zu führen, wodurch eine besonders effektive und schnelle Trocknung erreicht wird. Dieses Hindurchführen des Gases durch die Probe wird verbessert, wenn der Probe ein Flockungsmittel zugesetzt wird, so dass der Filterkuchen "porös" wird. Die Trocknung kann dadurch beschleunigt werden, dass das Gas, insbesondere Luft aufgeheizt wird, so dass auch durch das heiße Gas eine Wärmezufuhr zur Probe sichergestellt wird.

Um die Probe möglichst schnell und gleichzeitig effizient aufzuheizen, ist es auch möglich, Aufheizkörper in die Probe einzubringen, die derart ausgebildet sind, dass sie durch eine Strahlungsquelle, z.B. Mikrowellen aufheizbar sind. Diese Aufheizkörper können weiterhin derart aufgebaut sein, dass sie die entwässerte Probe zur Durchströmung mit Gas bzw. Luft lockern und auch bei der Entwässerung unterstützend wirken. Zum Beispiel Körper aus porösem bzw. luft- oder gasdurchlässigem Material bzw. einem solchen Aufbau können Suspensionsmittel aufnehmen, ohne Faserstoffe/Feststoffe zu bilden und das Suspensionsmittel beim Aufheizen schnell wieder abgeben.

Weiterhin sind Gasabführeinrichtungen vorgesehen, die derart ausgebildet und angeordnet sind, dass die Probe im Wesentlichen kontinuierlich von Gas durchströmt wird. Diese Gasabführeinrichtungen können eine Vakuumpumpe umfassen. Über die Gasabführeinrichtungen bzw. den Gasstrom ist es möglich, die Temperatur der Probe zu erfassen. Hierzu ist eine Temperaturmesseinrichtung vorgesehen, die ein Temperaturmesssignal erzeugt, das der Temperatur des die Probe durchströmenden Gases entspricht. Dies stellt eine besonders einfache und effektive Methode der Temperaturmessung dar, wobei gegebenenfalls ein Korrekturfaktor für den Temperaturverlust zwischen der Probe und dem Messfühler einzurechnen ist.

Es ist weiterhin die Steuer- und Auswerteeinrichtung mit Speichereinrichtungen versehen und derart ausgebildet, dass das Gewicht der Probe
- im nassen Zustand zum Feststellen der gesamten Probemasse,
- im getrockneten Zustand zum Feststellen des Probengehaltes an Trockenmasse,
- nach einem Veraschen, vorzugsweise bei etwa 580 °C zum Feststellen der Masse an Kalziumkarbonat und
- nach einem Verglühen, vorzugsweise bei über 580 °C zum Feststellen der Masse an Kalziumoxid

festgestellt und aufgezeichnet wird. Damit kann also in einem einzigen Messvorgang eine Mehrzahl von Parametern festgehalten und ausgewertet werden. Die Steuer- und Auswerteeinrichtung kann derart ausgebildet sein, dass die gespeicherten Ausgangssignale von Temperatur und Gewicht anhand von besonderen Werten, insbesondere von Extremwerten eines Verlaufes von Temperatur und Gewicht über die Zeit auswertbar sind. Dadurch ist es möglich, die Messvorgänge über Rechenvorgänge nicht nur zu automatisieren sondern auch abzukürzen. Beispielsweise ist es möglich, beim Trocknen einer Probe dann, wenn man den Verlauf des Gewichtes in Abhängigkeit von der Zeit festgestellt hat, die Kurve so zu extrapolieren, dass das bei einer schonenden Trocknung sich ergebende Trockengewicht errechnet werden kann, ohne dass man die Probe tatsächlich auf diese schonende Weise vollständig zu Ende trocknet. Wenn hinreichend Daten zum Extrapolieren der Kurve vorliegen, kann mit einer erhöhten Energiezufuhr gearbeitet werden, die schon in den nächsten Vorgang, nämlich das Verbrennen der organischen Kohlenstoffverbindungen führt. Ebenso ist es möglich, von diesem Schritt des Verbrennens nach Sammeln einer hinreichenden Anzahl von Messpunkten über eine Extrapolation der sich ergebenden Kurve den Verfahrensschritt abzukürzen und die Temperatur auf über 560 - 580 °C (die Temperatur zur Umsetzung von CaCO₃ zu CaO + CO₂) ansteigen zu lassen, so dass man (schnell) zum nächsten Verfahrensschritt gelangt, ohne - wie bisher üblich - lange abwarten zu müssen, bis der jeweilige Verfahrensschritt mit Sicherheit vollständig durchgeführt wurde, um dann die verbliebene Masse durch Wiegen feststellen zu können.

Besonders vorteilhaft ist die Verwendung der erfindungsgemäßen Vorrichtung bzw. die Anwendung des erfindungsgemäßen Verfahrens zum Bestimmen von Pigment- und Faseranteilen einer Suspension zur Papierherstellung. Durch die hohe Geschwindigkeit und gleichzeitig hohe Präzision ist ein Regeln des Papierherstellungsprozesses in vorteilhafter Weise möglich.

Weiterhin ist die Verwendung der Vorrichtung bzw. des Verfahrens bei der Bestimmung von organischen und anorganischen Kohlenstoffanteilen in industriellen Abwässern und Schlämmen insbesondere zur Minimierung von Flockungsmittelzugaben (z.B. in Bergwerksabwässern) bzw. zur Berechnung von Deponiewerten sehr vorteilhaft. Es ergibt sich hieraus eine erhebliche Kostenersparnis und geringere Belastung der Umwelt beim Deponieren der Abfallstoffe.

Vorteilhafte Ausführungsformen der Erfindung ergeben sich aus den Unteransprüchen und der nachfolgenden Beschreibung von Ausführungsbeispielen, die anhand von Abbildungen näher erläutert werden. Hierbei zeigen
- Fig. 1 eine schematische Darstellung einer ersten Ausführungsform der Erfindung,
- Fig. 2 eine zweite Ausführungsform der Erfindung und
- Fig. 3 den Verlauf von Temperatur und Gewicht einer Probe über die Zeit aufgrund einfacher Überlegungen zur Erläuterung des erfindungsgemäßen Verfahrens.

In der nachfolgenden Beschreibung werden für gleiche und gleich wirkende Teile dieselben Bezugsziffern verwendet.

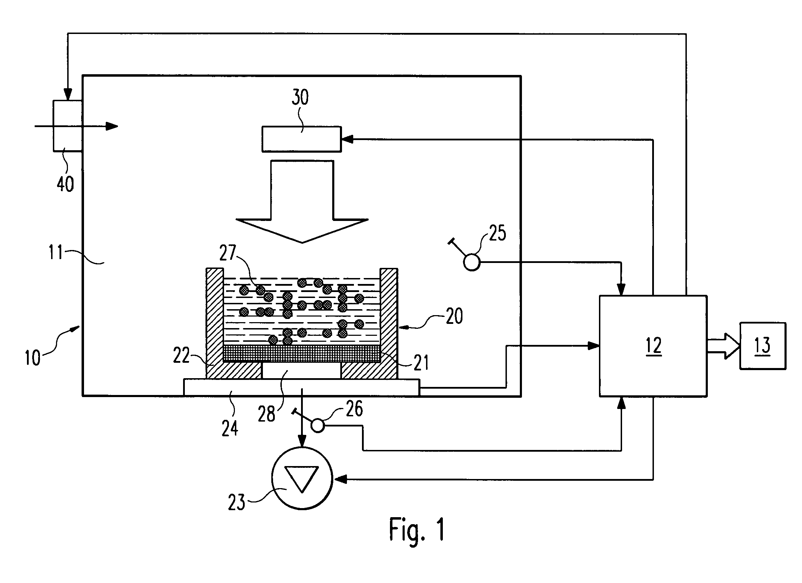

In Fig. 1 ist stark schematisiert eine Behandlungskammer 10 gezeigt, in deren Innenraum 11 sich eine Probenaufnahmevorrichtung 20 befindet. Diese umfasst bei der in Fig. 1 gezeigten Ausführungsform ein Filter 21, das in einem Gefäß 22 angeordnet ist, welches unter dem Filter 21 eine Öffnung 28 aufweist. Diese Öffnung 28 ist gasdicht mit einer Absaugpumpe 22 bzw. einer Vakuumpumpe verbunden.

Das Gefäß 22, welches zur Aufnahme einer Probe dient, steht auf einer Waage 24, deren Ausgangssignale das Gewicht der Probenaufnahmevorrichtung 20 samt Inhalt und Filter in elektrischer Form repräsentieren.

Im Innenraum 11 ist eine Wärmeenergiequelle 30 vorgesehen, die in an sich bekannter Weise ausgebildet sein kann. Vorzugsweise umfasst diese Wärmeenergiequelle 30 (auch) eine Mikrowellen-Strahlungsquelle. Zum Abtasten der Temperatur im Innenraum 11 ist ein Innenraum-Temperatursensor 25 vorgesehen. Weiterhin ist ein Gasstrom-Temperatursensor 26, der die Temperatur des Mediums abtastet, welches durch die Absaugpumpe 23 abgesaugt wird.

In den Innenraum 11 wird durch eine Gaskonditionierungseinrichtung 40 ein Gas angesaugt, wobei die Gaskonditionierungseinrichtung 40 über die Steuerungseinrichtung 12 gesteuert wird. Die Gaskonditionierungseinrichtung 40 ist derart ausgebildet, dass eine Trocknung/Vorheizung von angesaugtem Gas durchgeführt werden kann, so dass eine zusätzliche Wärmeenergiequelle vorliegt. Darüber hinaus ist es möglich, statt Luft auch ein inertes Gas, z.B. Stickstoff durch die Gaskonditionierungseinrichtung 40 zuzuführen, so dass beim Trocknen einer Probe auch bei höheren Temperaturen nicht die Gefahr besteht, deren Bestandteile zu oxidieren bzw. zu verbrennen.

Die Steuerungseinrichtung 12 umfasst auch eine Auswerteeinrichtung (einen Computer), mit Speichereinrichtungen für die aufgenommenen Messsignale und zum Speichern festgestellter Resultate, die auf einer Anzeige 13 bzw. einer Dokumentationseinrichtung (z.B. einem Schreiber) wiedergegeben werden.

Um eine im Gefäß 22 enthaltene Probe schneller mit Mikrowellenenergie aufheizen zu können, ist es von Vorteil, wenn der Probe Aufheizkörper 27 zugegeben werden, welche durch Mikrowellenenergie aufheizbar sind aber ansonsten (wie natürlich auch das Probengefäß 20) während des gesamten Verfahrensablaufes sich inert verhalten.

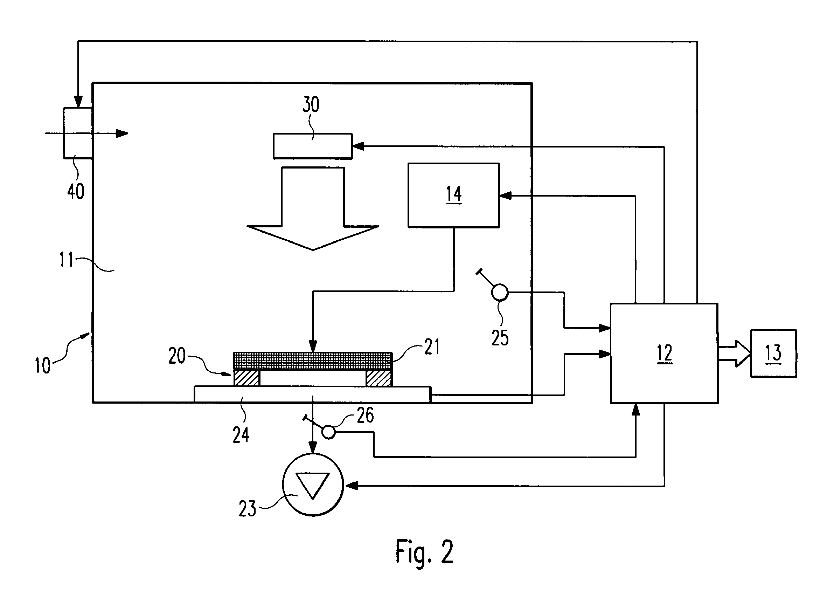

Die in Fig. 2 gezeigte Ausführungsform der Erfindung unterscheidet sich von der nach Fig. 1 dadurch, dass an Stelle des Gefäßes 22, das ein hinreichend großes Volumen zur Aufnahme einer hinreichend großen Probe aufweisen muss, die Probenaufnahmevorrichtung 20 im Wesentlichen nur aus dem Filter 21 besteht, unter welchem über die Absaugpumpe 23 Gas abgesaugt wird. Die Probe wird in diesem Fall durch eine Probenzuführungseinrichtung 14, die auch außerhalb des Innenraums 11 der Behandlungskammer 10 angeordnet ist, im Wesentlichen kontinuierlich oder tropfenweise zugeführt und während des Zuführens sogleich entwässert wird. Dadurch kann eine schnellere Entwässerung erzielt werden. Um eine solche schnellere Entwässerung bei der Ausführungsform nach Fig. 1 zu erzielen, ist es von Vorteil, wenn der Probe ein Flockungsmittel beigegeben wird, da dies dazu führt, dass die Probe "lockerer" bzw. "gasdurchlässiger" wird.

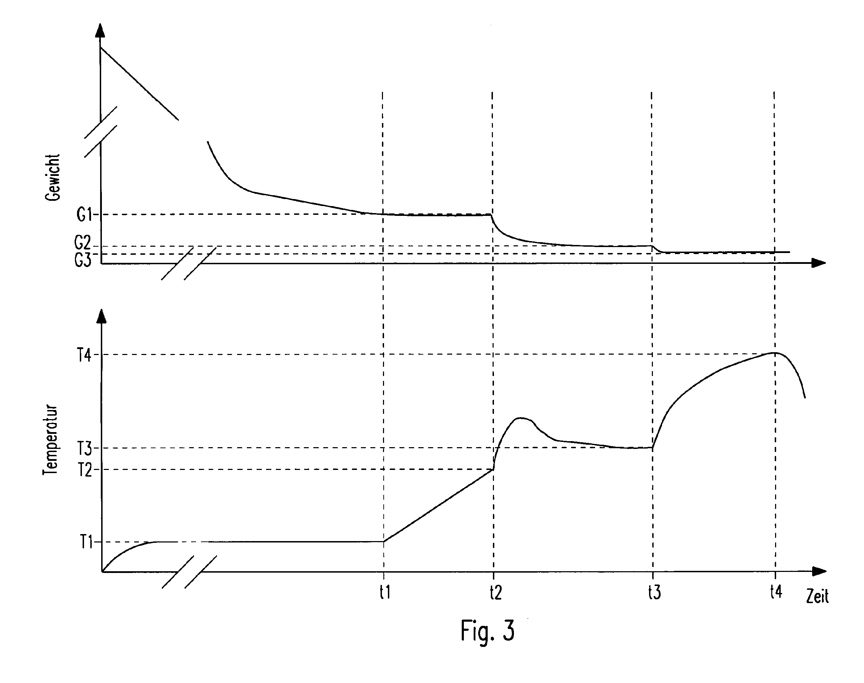

Nachfolgend wird der Betrieb der erfindungsgemäßen Vorrichtung bzw. die Durchführung des erfindungsgemäßen Verfahrens anhand von Fig. 3 näher erläutert. Es sei an dieser Stelle darauf hingewiesen, dass diese Abbildung einen möglichen, nicht einen gemessenen Analyse-Verlauf wiedergibt. Die Temperatur ist diejenige der Probe, welche mittels des Gasstrom-Temperatursensor 26 gemessen werden kann, da das durch die Probe geführte Gas im Wesentlichen die Temperatur der Probe wiedergibt.

In einer ersten Phase wird das Wasser aus der Probe abgesaugt. Gleichzeitig wird geheizt, so dass die Temperatur ansteigt bis auf die Temperatur T1, welche der Verdampfungstemperatur des Suspensionsmittels entspricht, also bei 100 °C liegt, wenn es sich um eine wässrige Probe handelt. Unter ständiger Energiezufuhr wird der Rest des in der Probe enthaltenen Wassers verdampft, das Gewicht der Probe sinkt also ab, bis es zum Zeitpunkt t1 das Gewicht G1 erreicht hat. Zu diesem Zeitpunkt t1 ist das Wasser (bzw. auch ein anderes Suspensionsmittel) verdampft. Die Temperatur steigt nun bis zum Zeitpunkt t2 bei gleich bleibendem Gewicht G1 an.

Zum Zeitpunkt t2 hat die Probe eine Temperatur erreicht, bei welcher die Kohlenstoff enthaltenden organischen Anteile verbrennen. Durch die hierbei frei werdende Energie steigt die Temperatur sprunghaft über die durch die Wärmeenergiequelle zunächst vorgegebene Temperatur T3 (ca. 580 °C) an und sinkt (durch die Wärmeverluste bzw. zugeführtes Gas/Luft) auf diesen Temperaturwert T3 wieder ab. Das Gewicht der Probe nimmt kontinuierlich ab, bis es den Wert G2 erreicht hat, welcher das Gewicht der Probe darstellt, bei dem die Probe verbrannt bzw. verascht ist, wodurch der Anteil an Kalziumkarbonat feststellbar ist.

Beim weiteren Aufheizen der Probe auf eine Temperatur T4, die über 580 °C liegt, nimmt im Zeitraum von t3 - t4 das Gewicht der Probe vom Wert G2 auf den Wert G3 ab, so dass nunmehr die Masse von Kalziumoxid und hieraus der Gehalt an anorganisch gebundenem Kohlenstoff feststellbar ist. Dieser Analysevorgang ist an sich bekannt.

Dadurch nun, dass die Temperatur der Probe und auch gleichzeitig ihr Gewicht über die vorgesehenen Sensoren ständig überwacht werden, ist aufgrund des Verlaufes von Gewicht und/oder Temperatur über die Zeit feststellbar, wann die jeweiligen Vorgänge, also die Entwässerung/Trocknung die Verbrennung der organischen Kohlenstoffe und die Verbrennung der anorganischen Kohlenstoffe die jeweils abgeschlossen sind. Es müssen also keine Sicherheits-Zeiträume abgewartet werden, so dass eine Verkürzung der gesamten Verfahrensdauer erzielbar ist.

Weiterhin ist aus den Kurvenverläufen gemäß Fig. 3 ersichtlich, dass eine Extrapolation der sich ergebenden Gewichtswerte möglich ist. Dadurch ist es beispielsweise möglich, mit erhöhter Energiezufuhr und damit verkürzten Aufheizzeiten zu arbeiten. Man muss beispielsweise nicht den Zeitpunkt t1 oder gar t2 abwarten, um das Gewicht der wasserfreien Probe bestimmen zu können, da sich dieses bereits aus dem Verlauf der Gewichtsabnahme vor dem Zeitpunkt t1 herleiten lässt. Gleiches gilt für die beiden nachfolgenden Phasen, in denen anorganischer bzw. organischer Kohlenstoff verbrannt bzw. oxidiert wird.

Ein weiterer Vorteil der erfindungsgemäßen Vorrichtung liegt darin, dass auch andere suspendierte Feststoffe mit dieser Vorrichtung schnell und einfach messbar sind. Zum Beispiel kann eine Bestimmung der Pigmentanteile (also praktisch ohne organisch Anteile) einer Streichfarbensuspension mit diesem (einen) Gerät beim Papiermachen erfolgen, so dass diesem ein "Allround-Messgerät" zur Verfügung steht. Die Schritte der Verbrennung und Pyrolyse entfallen dabei, jedoch wird das Abnutschen, Trocknen und Wiegen erheblich beschleunigt.

### Bezugszeichenliste

- 10: Behandlungsraum
- 11: Innenraum
- 12: Steuer-/Auswerteeinrichtung
- 13: Anzeige/Dokumentation
- 14: Probenzuführungseinrichtung
- 20: Probenaufnahmevorrichtung
- 21: Filter
- 22: Gefäß
- 23: Absaugpumpe
- 24: Waage
- 25: Innenraum-Temperatursensor
- 26: Gasstrom-Temperatursensor
- 27: Aufheizkörper
- 28: Öffnung
- 30: Wärmeenergiequelle
- 40: Gaskonditionierungseinrichtung

## Patentansprüche

1. Vorrichtung zur Bestimmung eines organischen und eines anorganischen Anteils einer ein Suspensionsmittel, insbesondere Wasser und Feststoffe umfassenden Probe, mit einer vorzugsweise dicht abschließbaren Behandlungskammer (10), umfassend
- eine Probenaufnahmevorrichtung (20);
- eine Filtereinrichtung (21), die derart ausgebildet und an der Probenaufnahmevorrichtung (20) angebracht ist, dass das Suspensionsmittel durch die Filtereinrichtung (21) aus der Probe abführbar ist;
- eine Absaugvorrichtung (23) zum Abführen des Suspensionsmittels;
- eine Wärmeenergiequelle (30) zum Zuführen von Wärmeenergie zur Probe;
- eine Temperaturmesseinrichtung (25, 26), zur Erfassung der Temperatur der Probe;
- eine Wiegeeinrichtung (24) zum Wiegen der Probe;
und mit einer Steuer- und Auswerteeinrichtung (12) zum Steuern der Wärmeenergiequelle (30) und zum Aufnehmen und Speichern von Ausgangssignalen der Temperaturmesseinrichtung (25, 26) sowie der Wiegeeinrichtung (24).

2. Vorrichtung nach Anspruch 1,
**dadurch gekennzeichnet, dass**
die Filtereinrichtung (21) ein für Verbrennungs- und Pyrolysetemperaturen geeignetes Filter, vorzugsweise ein Glasfaserfilter umfasst, das vorzugsweise auswechselbar ist.

3. Vorrichtung nach einem der vorhergehenden Ansprüche,
**dadurch gekennzeichnet, dass**
die Wärmeenergiequelle (30) eine Quelle zur Erzeugung von Mikrowellen, z.B. im Bereich von 2,455 GHz umfasst.

4. Vorrichtung nach einem der vorhergehenden Ansprüche,
**dadurch gekennzeichnet, dass**
die Wärmeenergiequelle (30) eine Quelle zur Erzeugung von Infrarot-Strahlung umfasst.

5. Vorrichtung nach einem der vorhergehenden Ansprüche,
**gekennzeichnet durch**
eine Probenzuführeinrichtung (14) zum insbesondere kontinuierlichen oder tropfenweisen Zuführen einer Probe über eine bestimmten Zeitraum hinweg zur Filtereinrichtung (21).

6. Vorrichtung nach einem der vorhergehenden Ansprüche,
**dadurch gekennzeichnet, dass**
eine Gaskonditionierungseinrichtung (40) vorgesehen ist, zum Zuführen von Gas, insbesondere von Luft zur Behandlungskammer (10), wobei die Gaskonditionierungseinrichtung (40) vorzugsweise Einrichtungen zum Konditionieren, insbesondere Aufheizen und/oder Trocknen des zugeführten Gases und/oder zum Wechseln des Gases z.B. von Luft zu Stickstoff aufweist.

7. Vorrichtung zu einem der vorhergehenden Ansprüche,
**dadurch gekennzeichnet, dass**
die Steuer- und Auswerteeinrichtung (12) Speichereinrichtungen umfasst und derart ausgebildet ist, dass das Gewicht der Probenaufnahmevorrichtung
- im nassen Zustand, zum Feststellen der gesamten Probenmasse;
- im getrockneten Zustand, zum Feststellen des Probengehaltes an Trockenmasse;
- nach einem Veraschen, vorzugsweise bei etwa 580 °C, zum Feststellen der Masse an CaCO₃;
- nach einem Verglühen, vorzugsweise bei über 580 °C, zum Feststellen der Masse an CaO
festgestellt und aufgezeichnet wird.

8. Vorrichtung nach einem der vorhergehenden Ansprüche,
**gekennzeichnet durch**
Aufheizkörper (27) zum Einbringen in die Probe, die derart ausgebildet sind, dass sie **durch** die Wärmeenergiequelle (30) aufheizbar sind.

9. Vorrichtung nach einem der vorhergehenden Ansprüche,
**gekennzeichnet durch**
ein Flockungsmittel, zum Einbringen in die Probe und zu deren Auflockerung beim Abführen des Suspensionsmittel.

10. Vorrichtung nach einem der vorhergehenden Ansprüche,
**gekennzeichnet durch**
Gasabführeinrichtungen (23), die derart ausgebildet und angebracht sind, dass die Probe im Wesentlichen kontinuierliche von Gas durchströmbar ist.

11. Vorrichtung nach Anspruch 10,
**dadurch gekennzeichnet, dass**
die Gasabführeinrichtungen (23) eine Vakuumpumpe umfassen.

12. Vorrichtung nach einem der Ansprüche 10 oder 11,
**dadurch gekennzeichnet, dass**
die Gasabführeinrichtungen (23) eine Temperaturmesseinrichtung (26) umfassen zur Erzeugung eines Temperatur-Messsignals, das der Temperatur des die Probe durchströmenden Gases entspricht.

13. Vorrichtung nach einem der vorhergehenden Ansprüche,
**dadurch gekennzeichnet, dass**
die Steuer- und Auswerteeinrichtung (12) derart ausgebildet ist, dass die gespeicherten Ausgangssignale von Temperatur und Gewicht anhand von besonderen Werten, insbesondere von Extremwerten eines Verlaufes von Temperatur und/oder Gewicht über die Zeit auswertbar sind.

14. Verfahren zum Bestimmen eines organischen und eines anorganischen Anteils einer ein Suspensionsmittel und Feststoffe enthaltenden Probe, umfassend die Schritte
- Einbringen einer Probe in eine Behandlungskammer;
- Bestimmung der Masse der Probe in der Behandlungskammer;
- Abführen, insbesondere Absaugen des Suspensionsmittels durch Filtern der Probe in der Behandlungskammer;
- Bestimmung der Masse der trockenen Probe in der Behandlungskammer;
- Zuführen von Wärmeenergie zur Probe in der Behandlungskammer, bis die Probe verascht ist;
- Bestimmung der Masse des veraschten Probenrestes in der Behandlungskammer;
- Zuführen von Wärmeenergie und von Sauerstoff zur Asche, bis diese in der Behandlungskammer verglüht ist;
- Bestimmung der Masse des verglühten Probenrestes in der Behandlungskammer.

15. Verfahren nach Anspruch 14,
**dadurch gekennzeichnet, dass**
der Probe vor dem Abführen des Suspensionsmittels ein Flockungsmittel zur Lockerung eines entstehenden Filterkuchens zugeführt wird.

16. Verfahren nach einem der Ansprüche 14 oder 15,
**dadurch gekennzeichnet, dass**
mindestens in vorbestimmten Zeitabschnitten ein Gasstrom durch die Probe hindurch geführt wird.

17. Vorrichtung nach Anspruch 16,
**dadurch gekennzeichnet, dass**
die Temperatur des Gasstroms nach einem Durchströmen der Probe gemessen wird.

18. Verfahren nach einem der Ansprüche 14 - 17,
**dadurch gekennzeichnet, dass**
ein Verlauf von Temperatur und/oder Gewicht der Probe über die Zeit gespeichert werden.

19. Verfahren nach Anspruch 18,
**dadurch gekennzeichnet, dass**
Extremwerte des Verlaufs zur Bestimmung von bestimmten Bearbeitungszuständen der Probe ermittelt werden.

20. Verfahren nach einem der Ansprüche 18 oder 19,
**dadurch gekennzeichnet, dass** aus dem Verlauf messtechnisch nicht erfasste Werte extrapoliert werden.

21. Verwendung einer Vorrichtung nach einem der Ansprüche 1 - 13 oder eines Verfahrens nach einem der Ansprüche 14 - 20 zum Bestimmen von Pigment- und Faseranteilen einer Suspension zur Papierherstellung.

22. Verwendung einer Vorrichtung nach einem der Ansprüche 1 - 13 oder eines Verfahrens nach einem der Ansprüche 14 - 20 zum Bestimmen eines organischen und eines anorganischen Anteils in feststoffhaltigen Industrieabwässern und -schlämmen, insbesondere zur Minimierung von Flockungsmittelzugaben und/oder zur Berechnung von Deponiewerten.

23. Verwendung einer Vorrichtung nach einem der Ansprüche 1 - 13 zur Bestimmung eines Pigmentanteils einer Papierstreichfarbe.

## Geänderte Patentansprüche

### Geänderte Patentansprüche gemäss Regel 86(2) EPÜ.

**1.** Verfahren zum Bestimmen eines organischen und eines anorganischen Anteils einer ein Suspensionsmittel und Feststoffe enthaltenden Probe, umfassend die Schritte
- Einbringen einer Probe in eine Behandlungskammer;
- Abführen, insbesondere Absaugen des Suspensionsmittels durch Filtern der Probe in der Behandlungskammer;
- Bestimmung der Masse der trockenen Probe in der Behandlungskammer;
- Zuführen von Wärmeenergie zur Probe in der Behandlungskammer, bis die Probe verascht ist;
- Bestimmung der Masse des veraschten Probenrestes in der Behandlungskammer.

**2.** Verfahren nach Anspruch 1,
**dadurch gekennzeichnet, dass**
der Probe vor dem Abführen des Suspensionsmittels ein Flockungsmittel zur Lockerung eines entstehenden Filterkuchens zugeführt wird.

**3.** Verfahren nach einem der Ansprüche 1 oder 2,
**dadurch gekennzeichnet, dass**
mindestens in vorbestimmten Zeitabschnitten ein Gasstrom durch die Probe hindurch geführt wird.

**4.** Vorrichtung nach Anspruch 3,
**dadurch gekennzeichnet, dass**
die Temperatur des Gasstroms nach einem Durchströmen der Probe gemessen wird.

**5.** Verfahren nach einem der Ansprüche 1 - 4,
**dadurch gekennzeichnet, dass**
ein Verlauf von Temperatur und/oder Gewicht der Probe über die Zeit gespeichert werden.

**6.** Verfahren nach Anspruch 5,
**dadurch gekennzeichnet, dass**
Extremwerte des Verlaufs zur Bestimmung von bestimmten Bearbeitungszuständen der Probe ermittelt werden.

**7.** Verfahren nach einem der Ansprüche 5 oder 6,
**dadurch gekennzeichnet, dass**
aus dem Verlauf messtechnisch nicht erfasste Werte extrapoliert werden.

**8.** Vorrichtung zur Bestimmung eines organischen und eines anorganischen Anteils einer ein Suspensionsmittel, insbesondere Wasser und Feststoffe umfassenden Probe zur Durchführung eines Verfahrens nach einem der Ansprüche 1-7, mit einer vorzugsweise dicht abschließbaren Behandlungskammer (10), umfassend
- eine Probenaufnahmevorrichtung (20);
- eine Filtereinrichtung (21), die derart ausgebildet und an der Probenaufnahmevorrichtung (20) angebracht ist, dass das Suspensionsmittel durch die Filtereinrichtung (21) aus der Probe abführbar ist;
- eine Absaugvorrichtung (23) zum Abführen des Suspensionsmittels;
- eine Wärmeenergiequelle (30) zum Zuführen von Wärmeenergie zur Probe;
- eine Temperaturmesseinrichtung (25, 26), zur Erfassung der Temperatur der Probe;
- eine Wiegeeinrichtung (24) zum Wiegen der Probe;
und mit einer Steuer- und Auswerteeinrichtung (12) zum Steuern der Wärmeenergiequelle (30) und zum Aufnehmen und Speichern von Ausgangssignalen der Temperaturmesseinrichtung (25, 26) sowie der Wiegeeinrichtung (24).

**9.** Vorrichtung nach Anspruch 8,
**dadurch gekennzeichnet, dass**
die Filtereinrichtung (21) ein für Verbrennungs- und Pyrolysetemperaturen geeignetes Filter, vorzugsweise ein Glasfaserfilter umfasst, das vorzugsweise auswechselbar ist.

**10.** Vorrichtung nach einem der Ansprüche 8 oder 9,
**dadurch gekennzeichnet, dass**
die Wärmeenergiequelle (30) eine Quelle zur Erzeugung von Mikrowellen, z.B. im Bereich von 2,455 GHz umfasst.

**11.** Vorrichtung nach einem der Ansprüche 8-10,
**dadurch gekennzeichnet, dass**
die Wärmeenergiequelle (30) eine Quelle zur Erzeugung von Infrarot-Strahlung umfasst.

**12.** Vorrichtung nach einem der Ansprüche 8-11,
**gekennzeichnet durch**
eine Probenzuführeinrichtung (14) zum insbesondere kontinuierlichen oder tropfenweisen Zuführen einer Probe über eine bestimmten Zeitraum hinweg zur Filtereinrichtung (21).

**13.** Vorrichtung nach einem der Ansprüche 8-12,
**dadurch gekennzeichnet, dass**
eine Gaskonditionierungseinrichtung (40) vorgesehen ist, zum Zuführen von Gas, insbesondere von Luft zur Behandlungskammer (10), wobei die Gaskonditionierungseinrichtung (40) vorzugsweise Einrichtungen zum Konditionieren, insbesondere Aufheizen und/oder Trocknen des zugeführten Gases und/oder zum Wechseln des Gases z.B. von Luft zu Stickstoff aufweist.

**14.** Vorrichtung zu einem der Ansprüche 8-13,
**dadurch gekennzeichnet, dass**
die Steuer- und Auswerteeinrichtung (12) Speichereinrichtungen umfasst und derart ausgebildet ist, dass das Gewicht der Probenaufnahmevorrichtung
- im nassen Zustand, zum Feststellen der gesamten Probenmasse;
- im getrockneten Zustand, zum Feststellen des Probengehaltes an Trockenmasse;
- nach einem Veraschen, vorzugsweise bei etwa 580 °C, zum Feststellen der Masse an CaCO₃;
- nach einem Verglühen, vorzugsweise bei über 580 °C, zum Feststellen der Masse an CaO
festgestellt und aufgezeichnet wird.

**15.** Vorrichtung nach einem der Ansprüche 8-14,
**gekennzeichnet durch**
Aufheizkörper (27) zum Einbringen in die Probe, die derart ausgebildet sind, dass sie **durch** die Wärmeenergiequelle (30) aufheizbar sind.

**16.** Vorrichtung nach einem der Ansprüche 8-15,
**gekennzeichnet durch**
ein Flockungsmittel, zum Einbringen in die Probe und zu deren Auflockerung beim Abführen des Suspensionsmittel.

**17.** Vorrichtung nach einem der Ansprüche 8-16,
**gekennzeichnet durch**
Gasabführeinrichtungen (23), die derart ausgebildet und angebracht sind, dass die Probe im Wesentlichen kontinuierliche von Gas durchströmbar ist.

**18.** Vorrichtung nach Anspruch 17,
**dadurch gekennzeichnet, dass**
die Gasabführeinrichtungen (23) eine Vakuumpumpe umfassen.

**19.** Vorrichtung nach einem der Ansprüche 17 oder 18,
**dadurch gekennzeichnet, dass**
die Gasabführeinrichtungen (23) eine Temperaturmesseinrichtung (26) umfassen zur Erzeugung eines Temperatur-Messsignals, das der Temperatur des die Probe durchströmenden Gases entspricht.

**20.** Vorrichtung nach einem der Ansprüche 8-19,
**dadurch gekennzeichnet, dass**
die Steuer- und Auswerteeinrichtung (12) derart ausgebildet ist, dass die gespeicherten Ausgangssignale von Temperatur und Gewicht anhand von besonderen Werten, insbesondere von Extremwerten eines Verlaufes von Temperatur und/oder Gewicht über die Zeit auswertbar sind.
